# EUROPEAN PATENT SPECIFICATION

(11) **EP 0 808 909 B1**
(45) Date of publication and mention of the grant of the patent: **19.03.2003**
(21) Application number: 97850079.1
(22) Date of filing: 14.05.1997
(51) Int. Cl.: C21D 1/10, C21D 6/00

(54) **A process for production of a steel component**
Verfahren zum Herstellen von Stahlwerkstücken
Procédé pour la fabrication de pièces en acier

(30) Priority: 21.05.1996 SE 9601912
(43) Date of publication of application: 26.11.1997
(73) Proprietor: Ovako Steel AB, 813 82 Hofors (SE)
(72) Inventor: Andersson, Jan-Erik, NL-3984 AX Odijk (NL)
(74) Representative: Westman, Per Börje Ingemar

(56) References cited:
- DE-A- 2 449 237
- FR-A- 1 069 222
- FR-A- 1 441 317
- FR-A- 2 190 926
- US-A- 2 326 674
- PATENT ABSTRACTS OF JAPAN vol. 96, no. 1, 31 January 1996 & JP 07 238348 A (SANYO SPECIAL STEEL CO LTD), 12 September 1995,
- PATENT ABSTRACTS OF JAPAN vol. 018, no. 430 (C-1236), 11 August 1994 & JP 06 128700 A (HITACHI METALS LTD), 10 May 1994,
- BOGOLYUBSKII S D ET AL: "EFFECT OF DIFFERENT HEAT TREATMENT REGIMES ON THE STRUCTURE AND PROPERTIES OF MARTENSITIC STEEL 90KH18M" METAL SCIENCE AND HEAT TREATMENT, vol. 33, no. 1 / 02, 1 January 1991, pages 45-50, XP000261881

## Description

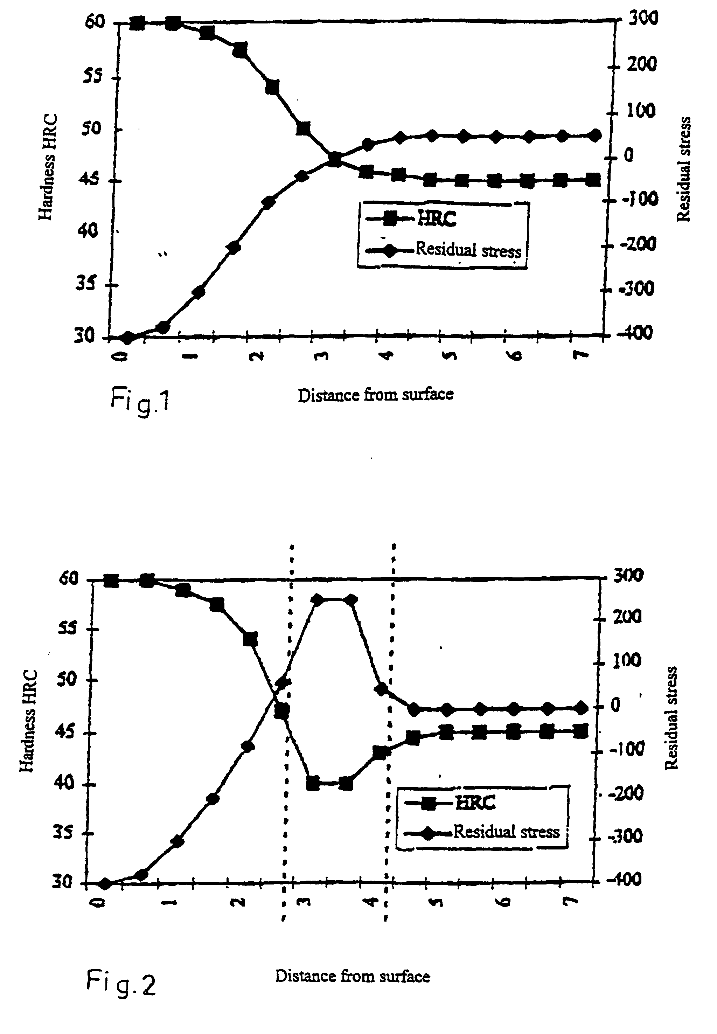

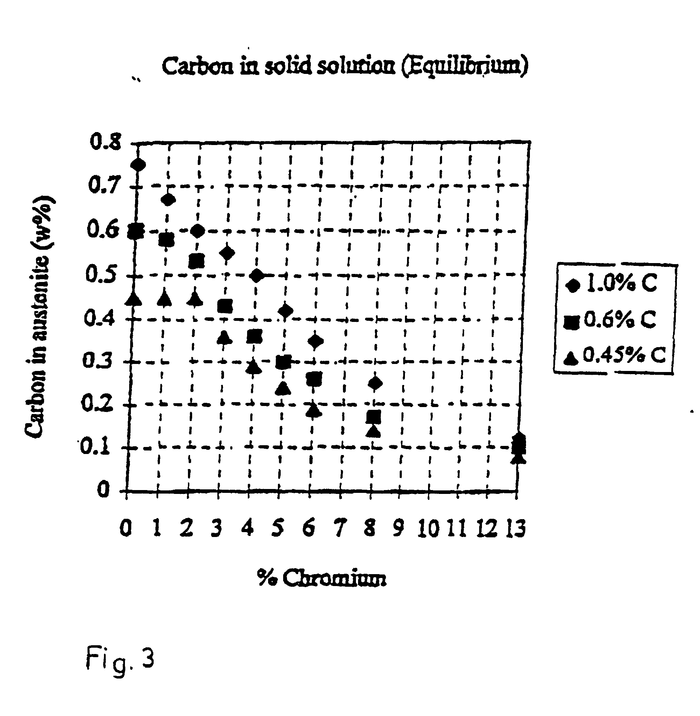

For producing components which are subjected to fatigue stresses case-hardening (carburization) is often used. This carburization gives the component a hard, carbon-rich surface at the same time as a tough, low-carbon core is obtained after hardening and annealing. Such a component has a very good resistance to wear and fatigue. The profile of hardness/residual stress obtained is schematically illustrated in the accompanying Fig. 1, and the surface residual stresses obtained are very favourable from fatigue life point of view.

However the case-carburizing procedure is a rather expensive and slow process and therefore many attempts have been made to use surface hardening with induction heating. Thereby is normally used a low-alloyed steel having a higher content of carbon, e.g. 0.5-0.6% and the surface zone of the component is heated rapidly, whereupon the component is subjected to quenching. The profile of hardness/residual stress then obtained is illustrated schematically in the accompanying Fig. 2. For instance, FR-A-1 441 317 discloses a process of induction hardening in which only the surface is fully austenitized.

This profile of hardness/residual stress obtained from a surface induction hardened component in combination with the low alloy steels used is sufficient in several situations, but often gives a limited contact fatigue strength and it also gives raise to problems under other fatigue conditions. One factor contributing to the often inferior properties is the reduction of hardness which is experienced at a distance below the surface of the material, and also the fact that most of the positive residual stresses are concentrated to the same depth. This occurs especially when using a medium hard core.

The martensite formed at the conventional induction heating using a low-alloyed steel will almost immediately reach the full carbon content, i.e. 0.5 - 0.6 %. The purpose of the present invention now therefore is to propose a process using induction hardening, thereby giving a more in-expensive and more rapid result than case-carburization but which eliminates the drawbacks earlier experienced with induction hardening, and this has been obtained with a process as defined in the accompanying claim 1.

For obtaining such a result it now is proposed a process adapted to give a result resembling to that obtained with case-carburizing, i.e. with a core having a solid soluted carbon content of 0.1 - 0.5 % and a surface layer having a carbon content of 0.5 - 1.2 %, and for this purpose is used an alloyed steel, which is tailored for giving such result, and this is obtained by increasing the content of a strong carbide former, such as e.g. chromium, whereby the austenite solid soluted carbon content can be reduced, such as illustrated in the graph according to Fig. 3. The process of the invention is given by claim 1.

By using such an alloyed chromium steel it is possible to control and adjust the carbon content in the core by means of a sufficiently high content of the carbide-forming alloy element, such as chromium, and by using this alloyed steel with a particular induction heating, whereby the core is heated to a temperature just within the austenitic region, normally 800-1000°C, thus that a predetermined soluted carbon content is reached, and rapidly heating the surface layer to a high temperature in the austenitic region, normally 900-1200°C, it is obtained, after quenching, a soluted carbon content profile throughout the component, which is the same as obtained at case-carburizing, i.e. as shown in Fig. 1, however without the drawbacks of the case-carburizing process described in the introduction of this specification. Preferably the heating of the core is made prior to the heating of the surface layer, but it is possible to obtain the same result by reversing this procedure.

Thus the process given by claim 1 and according to the invention reaches the goals set by using a certain material, e.g. a chromium steel having 0.3 - 1.2 % C and 1 - 25 % Cr together with a certain heat treatment procedure by which the component is austenitized throughout, whereby however the core and surface of the component are subjected to different temperature cycles.

The invention is not limited to the embodiment described in the specification, but modifications of the process and steel composition, using other carbide formers than chromium, thus defined are possible within the scope of the appended claims.

## Claims

1. A process for production of a steel component having a hard, rich carbon soluted surface and a tough, low carbon soluted core,
using an alloyed steel with a carbon content of 0.3 - 1.2% C and with an alloy element acting as a strong carbide former, and subjecting a component formed from this material to induction heating, whereby the core area is heated to a level in the lower region of the austenite area, at a temperature between 800 and 1000°C, thereby creating a certain soluted carbon level in the component core of 0.1 - 0.5 % C, and heating the surface region to a higher region within the austenite area, at a temperature of about 900 - 1200°C, thereby creating a certain soluted carbon level in the surface region of the component of 0.5 - 1.2 % C.

2. A process as claimed in claim 1, in which the strong carbide-forming alloy element chromium is used in an amount of 1 - 25 %.

## Patentansprüche

1. Verfahren zur Herstellung von Stahlbauteilen mit einer harten, stark mit Kohlenstoff angereicherten Oberfläche und einem zähen, niedrig mit Kohlenstoff angereicherten Kern, wobei das Verfahren einen Legierungsstahl mit einem Kohlenstoffgehalt zwischen 0,3 bis 1,2 % C und mit einem als starker Karbidbilder wirkenden Legierungselement verwendet und ein aus diesem Material gebildetes Bauteil einer Induktionserwärmung ausgesetzt wird, wobei der Kernbereich auf ein Niveau in der unteren Gegend des Austenitbereiches bei einer Temperatur zwischen 800 und 1.000°C erwärmt und dadurch ein bestimmtes Niveau an gelöstem Kohlenstoff in dem Bauteilkern von 0,1 bis 0,5 % C erzeugt wird, und der Oberflächenbereich auf eine höhere Zone innerhalb des Austenitbereiches mit einer Temperatur von ungefähr 900 bis 1.200°C erwärmt und dadurch ein bestimmtes Niveau an gelöstem Kohlenstoff im Oberflächenbereich des Bauteils von 0,5 bis 1,2 % C erzeugt wird.

2. Verfahren nach Anspruch 1, bei welchem als stark karbidbildendes Legierungselement Chrom in einer Menge von 1 bis 25 % verwendet wird.

## Revendications

1. Procédé pour fabriquer une pièce en acier ayant une surface dure, riche en carbone en solution et une partie centrale à grande ténacité, à faible teneur en carbone en solution,
utilisant un acier allié à teneur en carbone de 0,3 à 1,2% de C et avec un élément d'alliage se comportant comme un puissant métal de formation de carbure, et en soumettant une pièce formée avec cette matière à un chauffage par induction, grâce à quoi la zone centrale est chauffée à un niveau dans la région inférieure de la zone austénitique, à une température comprise entre 800 et 1000°C, en créant de ce fait une certaine teneur de carbone en solution dans la partie centrale de la pièce, d'une valeur de 0,1 à 0,5% de C, et en chauffant la région superficielle jusqu'à une région supérieure dans la zone austénitique, à une température d'environ 900 à 1200°C, en créant de ce fait une certaine teneur de carbone en solution dans la région superficielle de la pièce entre 0,5 et 1,2% de C.

2. Procédé selon la revendication 1, dans lequel
l'élément d'alliage constituant un puissant agent de formation de carbure utilisé est du chrome à raison de 1 à 25%.
